(19) Europäisches Patentamt
European Patent Office
Office européen des brevets

(11) **EP 3 608 653 B1**

(12) **EUROPEAN PATENT SPECIFICATION**

(45) Date of publication and mention
of the grant of the patent:
**13.03.2024  Bulletin 2024/11**

(21) Application number: **18187526.1**

(22) Date of filing: **06.08.2018**

(51) International Patent Classification (IPC):
**G01N 15/14** $^{(2024.01)}$    **G01N 15/00** $^{(2024.01)}$

(52) Cooperative Patent Classification (CPC):
**G01N 15/1456; G01N 15/1434;** G01N 2015/0026;
G01N 2015/0046; G01N 2015/1454;
G01N 2015/1493; G01N 2015/1497

(54) **APPARATUS AND METHOD FOR MEASURING PARTICLE SIZE USING BACKSCATTERED LIGHT**

VORRICHTUNG UND VERFAHREN ZUR MESSUNG DER TEILCHENGRÖSSE MITTELS RÜCKGESTREUTEM LICHT

APPAREIL ET PROCÉDÉ DE MESURE DE LA TAILLE DE PARTICULES AU MOYEN D'UNE LUMIÈRE RÉTRODIFFUSÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.02.2020  Bulletin 2020/07**

(73) Proprietor: **Institut von Karman de Dynamique des Fluides,
AISBL
1640 Rhode Saint Genèse (BE)**

(72) Inventors:
• **RUIZ, Sara Gonzales
  1640 Sint-Genesius-Rode (BE)**
• **VAN BEECK, Jeronimus Petrus Antonius
  Johannes
  1640 Sint-Genesius-Rode (BE)**
• **VETRANO, Maria Rosaria
  3001 Leuven (BE)**

(74) Representative: **Callewaert, Koen et al
Bureau Callewaert b.v.b.a.
Brusselsesteenweg 108
3090 Overijse (BE)**

(56) References cited:
**US-A1- 2008 218 738    US-A1- 2017 276 613**

• **SARA GONZÁLEZ RUIZ ET AL: "Feasibility of using glory and speckle patterns for sizing spherical and irregular particles", APPLIED OPTICS, OPTICAL SOCIETY OF AMERICA, WASHINGTON, DC; US, vol. 53, no. 21, 20 July 2014 (2014-07-20) , pages 4722-4728, XP001590698, ISSN: 0003-6935, DOI: 10.1364/AO.53.004722 [retrieved on 2014-07-17]**
• **PEDRO GARCÍA CARRASCAL ET AL: "Irregular particle sizing using speckle pattern for continuous wave laser applications", EXPERIMENTS IN FLUIDS., vol. 55, no. 11, 5 November 2014 (2014-11-05), XP055548675, DE ISSN: 0723-4864, DOI: 10.1007/s00348-014-1851-0**
• **SARA GONZÁLEZ RUIZ ET AL: "Sizing of sand and ash particles using their speckle pattern: influence of particle opacity", EXPERIMENTS IN FLUIDS., vol. 58, no. 8, 7 July 2017 (2017-07-07), XP055548644, DE ISSN: 0723-4864, DOI: 10.1007/s00348-017-2384-0**
• **M. TALBI ET AL: "Interferometric particle imaging of ice particles using a multi-view optical system", APPLIED OPTICS, vol. 57, no. 21, 19 July 2018 (2018-07-19) , page 6188, XP055548342, US ISSN: 1559-128X, DOI: 10.1364/AO.57.006188**

## Description

The present invention relates to an apparatus and method to measure the size of particles using the angular intensity distribution of light scattered in the near backward direction.

BACKGROUND OF THE INVENTION

The measurement of particle size is nowadays essential in many fields: application of pesticides in agriculture, characterization of ice and ash particles in atmospheric clouds, sizing of cement particles in building construction, etc.

Optical methods based on light scattering benefit from their non-intrusive nature; therefore, many have been developed for measuring particle size. In particular, some widely used optical methods obtain the size of particles from the angular intensity distribution of the scattered light. These methods share the same basic principle. First, a light source is used to illuminate the particles, which scatter the light in all directions in space. The light scattered by the particles interferes producing an angular intensity distribution that is characteristic of its size and optical properties. A detector located at a certain angular position is then used to record an image of this intensity pattern. Finally, an algorithm is used to retrieve the particle size from this image. The light used to illuminate the particles needs to be collimated and have a certain degree of spatial coherence. Laser light is the most convenient, and therefore the most used, because of its high degree of coherence and high intensity, which allows to measure scattered light from smaller particles.

Some of the optical methods that follow this principle are described in: A.R. Glover et al., 1995, Appl. Opt., "Interferometric laser imaging for droplet sizing: a method for droplet-size measurement in sparse spray systems". EP 1162447, Maeda and Kawaguchi, "Method and apparatus for measuring diameter and distribution of micro bubble and micro liquid drop and optical system for measuring diameter and distribution of micro bubble and micro liquid drop". J. P. A. J. van Beeck and M. L. Riethmuller, 1996, Appl. Opt., "Rainbow phenomena applied to the measurement of droplet size and velocity and to the detection of non-sphericity". J.P.A.J. van Beeck et al., 1999, Opt. Lett., "Global rainbow thermometry for droplet-temperature measurement". M. R. Vetrano et al., 2006, Exp. Fluids, "Characterization of a non-isothermal water spray by global rainbow thermometry". EP 0701707, Schmitz et al., "Laser diffraction particle sizing apparatus and method". US patent 3,689,772, George et al., "Photodetector light pattern detector".

In the method described by Glover, a combination of lenses is used to create a thin laser sheet that illuminates an ensemble of spherical droplets. A camera records an out-of-focus image of the droplets at a scattering angle of 45°. Each droplet appears separately in the image as an elliptical disk in which interference fringes are visible. While the size and shape of the disk depend only on the camera aperture and the position of the droplet, the frequency of the fringes is proportional to the droplet diameter. Later improvements of the technique include the addition of a cylindrical lens in order to compress the out-of-focus image of the droplets; this is described by Maeda and Kawaguchi in the patent EP1162447, and it allows to measure droplet size in sprays in which the droplet concentration is higher.

The method proposed by van Beeck and Riethmuller employs the rainbow phenomena to obtain size and temperature of a spherical droplet. In this method, a laser beam is used to illuminate the droplet, and a digital camera is used to record the interference pattern produced by the droplet at the rainbow angle, at approximately 139°. The rainbow fringes are used to determine the size and temperature of the droplet by means of the Airy theory. This method can also be used to obtain the size distribution of an ensemble of droplets (as described by van Beeck et al. and Vetrano et al.). In this case, the laser beam is expanded in order to illuminate a bigger portion of the spray. The sensor of the camera is located in such a way that it images the focal plane of the collecting lens, so the interference pattern is independent of the position of the droplets. In this way, a global rainbow pattern is obtained and the size distribution of the illuminated droplets can be retrieved.

The method described by Schmitz et al. in the patent EP0701707 can measure the size of spherical droplets and irregular particles. In this method, particle size is deduced from the diffraction pattern produced by the particles in the forward direction. A large number of individual photo detectors, located at multiple locations, are used to register the scattered light. Because of the circular symmetry of the diffraction pattern, an angular array is typically used, such as the one described by George et al. in the US patent 3,689,772.

All methods described above require that the light source and the detector are located at two different angular locations; however, in some applications, it is convenient or even necessary to have a more compact configuration and access the particles from only one angle. Such is the case, for instance, of aeronautical applications where both the illumination and the detector must be placed inside a plane, or of applications working in vacuum conditions, where the number of optical windows increases the cost of the experimental setup.

The present invention employs the same principle as the methods previously described but, in this case, the detector registers the light that is scattered by the particles in the direction of the illumination source, i.e. in the near backward direction.

The backscattered light has also been used to measure particle size by some existing devices which are described in: K. Beswick et al., 2014, Atmos. Meas. Tech., "The backscatter cloud probe - a compact low-profile autonomous optical spectrometer". US patent 4,492,467, Drain et al., "Measurement of the size of particles". B. Mayer et al., 2004, Atmos. Chem. Phys. Discuss., "Remote sensing of water cloud droplet size distributions using backscatter glory: a case study".

The device described by Beswick et al. employs a laser diode that produces linearly polarized light focused on a small region at 4 cm from the collecting optics. The light that is backscattered at an angle of 144-156° is collected into an avalanche photodiode, which transforms the scattered light into a voltage signal. This signal is related to the equivalent diameter of the particle by comparing the peak of intensity with the Lorenz-Mie theory. Although this device is advantageous for aeronautical applications due to its light weight and compact design, it presents several sources of error. First, the peak of backscattered light intensity does not increase monotonically with respect to the particle diameter. In addition, situations in which more than one particle crosses the probe volume, or in which the particle partially crosses the laser, can produce errors in the measurements.

The US patent 4,492,467 describes a device that measures the angular intensity distribution of the backscattered light. In this device, a quarter wave plate converts the incident plane polarized laser beam into a circularly polarized laser beam that illuminates the particles. A beam splitter redirects the backscattered light into a polarization analyzer, which leaves only the component of the scattered light that rotates in the opposite sense as the incident beam. Geometrical optics and diffraction theory are used to relate the positions of the intensity peaks found in this signal to the particle diameter. The detector consists in an annular arrangement of photo diodes or photomultipliers. Even if the use of the angular intensity distribution of the backscattered light, as proposed by this patent, offers a more accurate solution for measuring particle size with respect to the total intensity peak, the instrumentation that is required to fabricate this device is rather complex.

The device proposed by Mayer et al. is intended to measure cloud droplet size distributions. It uses a push broom imaging spectrometer to record an image of the glory phenomenon with an angular field of view of 34°. The droplet size distribution of the cloud is related with the angular intensity distribution of the glory, and it is calculated by fitting the Lorenz-Mie theory in the experimental signal. However, this method is only valid for very small spherical droplets (in the order of a few micrometers) and it requires the presence of sunlight to operate.

The article of Sara González Ruiz et al, "Feasibility of using glory and speckle patterns for sizing spherical and irregular particles", applied optics, optical society of America, Washington, DC; US, vol. 53, no. 21, pages 4722 - 4728, is describing a theoretical model to retrieve particle size from the analysis of glory and speckle patterns.

US 2008/218738 A1 discloses methods and apparatus for determining particle characteristics by measuring scattered light.

The objective of the present invention is to provide a compact apparatus and method to measure the size of particles from the angular intensity distribution of the backscattered light by using simple optical elements. The term particle used here refers both to spherical droplets and irregular particles. The particles to be measured by the invention must be larger than the wavelength of the incident light, and must have a refractive index that is different than the one of the surroundings. The invention also permits to characterize a particle as a droplet or as an irregular particle.

## SUMMARY OF THE INVENTION

The present invention includes a method for determining the size of a particle present in a sample volume according to claim 1 and a corresponding device according to claim 7. The device and method can be used for measuring the size of droplets employing the angular intensity distribution of the backscattered light. It comprises a coherent light source, an optical system to collect the backscattered light, a detector and means to calculate the size of the particles from the signal recorded in the detector. The light source may be a laser, either continuous or pulsed, a laser diode or another source of coherent light capable of producing a collimated beam. The laser beam should be bigger than the particle diameter but small enough to ensure a small sample volume. A small mirror located next to the collecting lens is used to reflect the laser beam in the direction of the particles. The optical system comprises a first lens that collects the backscattered light, a pinhole located at the image plane of the probe volume and a second lens that converges the light into the detector. The size of the pinhole determines the size of the sample volume. The detector records the out-of-focus image of the particles, where the angular distribution of the scattered light intensity is measured. A post-processor uses the angular frequency contained in this intensity pattern to obtain the size of the particles.

According to an interesting embodiment of the method, according to the invention, said out-of-focus image is projected onto a sensor element of said detector by means of a second lens.

According to an alternative embodiment of the method of the invention, said particle is characterized as a droplet when said intensity distribution pattern essentially comprises concentric circles or is characterized as an irregular particle when said intensity distribution pattern essentially comprises speckles.

Other particularities and advantages of the invention will become clear from the following description of a few specific embodiments of the method and device according to the invention. This description is merely given as an example and does not limit the scope of the claimed protection in any way; the reference numerals used below relate to the accompanying figures.

BRIEF DESCRIPTION OF THE DRAWINGS

Figures 1a and 1b are schematic representations of some preferred embodiments of the invention.
Figure 2 shows the angular intensity distribution of the backscattered light by a water droplet (simulated numerically for a droplet diameter of 140 $\mu$m and an incident light with a wavelength of 532 nm).
Figure 3 is the magnitude squared of the Fourier transform of Figure 2 in the horizontal direction.
Figure 4 shows the angular intensity distribution of the backscattered light by an irregular particle (simulated numerically for a particle diameter of 200 $\mu$m and an incident light with a wavelength of 632.8 nm).
Figure 5 is the magnitude squared of the Fourier transform of Figure 4 in the horizontal direction.
Figure 6 shows an experimental image of the backscattered light by a water droplet (droplet diameter of 140 $\mu$m and an incident light with a wavelength of 532 nm).
Figure 7 is the magnitude squared of the Fourier transform of Figure 6 in the horizontal direction.
Figure 8 shows an experimental image of the backscattered light by an irregular particle (for a particle diameter of 200 $\mu$m and an incident light with a wavelength of 632.8 nm).
Figure 9 is the magnitude squared of the Fourier transform of Figure 8 in the horizontal direction.
Figures 10a and 10b illustrate possible configurations for an industrial apparatus.

In the different figures, the same reference numerals refer to identical or analogous elements.

DETAILED DESCRIPTION OF THE INVENTION

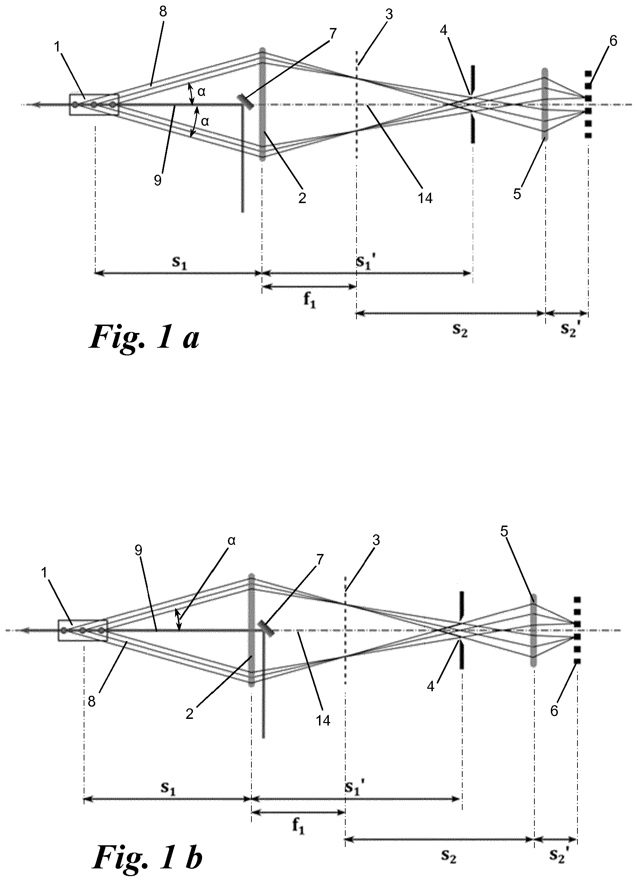

An apparatus and method for measuring the size of particles from the backscattered light is described in this section. The method proposed by the present invention employs the interferometric image of the particles in the backwards direction to measure the particle size. The apparatus comprises an illumination source, a number of optical elements to collect the backscattered light, and a detector. A schematic representation of the preferred embodiment of the invention is given in Figure 1a. In this embodiment, the incident light beam 9 is reflected by a small mirror 7, which directs the beam in the direction of the particles along an optical axis **14** towards a probe volume or a sample volume **1** containing particles to be measured. The rest of the optical elements, as well as the detector, are aligned with said axis **14**. The light **8** that is backscattered by the particles is collected by the lens **2** that is perpendicular to the axis **14**. The plane **3** is the focal plane of lens **2**. At this plane, all rays scattered by the particles at the same angle are focused into the same point. Therefore, the interference pattern that is formed in this plane is independent of the position of the particle along said optical axis **14**.

In the context of the present invention, by backscattered light is understood the light **8** that is returned by the particle in the direction of the impinging light beam **9** within an angle $\alpha$ of 1° to 15° with respect to the optical axis **14** as shown in Figs. 1a and 1b.

A pinhole **4** is located between lenses **2** and **5** in order to select the length of the probe volume **1** along said optical axis **14**. The position of the pinhole is determined by the equation:

$$\frac{1}{s_1} + \frac{1}{s_1'} = \frac{1}{f_1} \qquad (1)$$

where $s_1$ is the distance between the center of the probe volume and lens **2**, $s_1'$ is the distance between lens **2** and the pinhole, and $f_1$ is the focal length of lens **2**. The lens **5** and the detector having a sensor **6** can be selected independently or it can be, for instance, a commercially available camera with a CCD or a CMOS sensor. They are located in such a way that the image of plane **3** is recorded in the detector. In this case, the following equation applies:

$$\frac{1}{s_2} + \frac{1}{s_2'} = \frac{1}{f_2} \qquad (2)$$

where $s_2$ is the distance between plane **3** and lens **5**, $s_2'$ is the distance between lens **5** and the sensor **6** of the detector, and $f_2$ is the focal length of lens **5**. The length L of the probe volume depends on the critical scattering angle and it is estimated from the following equation:

$$L = \frac{d_{pin}}{M\theta} \qquad\qquad (3)$$

where $d_{pin}$ is the diameter of the pinhole aperture, $\theta$ is the scattering angle and $M$ is the magnification factor, defined as $M = s_1'/s_1$.

The incident light beam must be coherent, typically a laser. The beam diameter must be bigger than the biggest particle diameter but small enough to ensure a small sample volume. Other means of directing the incident light beam into the particles may be used instead of the small mirror, such as a beam splitter. Nevertheless, the small mirror proposed in the preferred embodiment is believed by the inventors to provide the best image quality.

The embodiment represented in Figure 1b is very similar to the one presented in Figure 1a, with the exception that, in this case, the mirror reflecting the incident illumination beam is located before lens **2**. In this case, the illumination beam will be focused at a distance that will be determined by the focal length of lens **2**. Therefore, the location of the pinhole **4** needs to be selected accordingly.

The image obtained by the detector is different depending on the nature of the particle. In the case of a spherical droplet or bubble, the backscattered light intensity distribution in the image has the appearance of concentric rings. This intensity pattern is mathematically described by the Lorenz-Mie theory as:

$$I(r, \varphi) = \frac{I_b}{(kr)^2}\left[ i_1(\theta)\sin^2(\varphi) + i_2(\theta)\cos^2(\varphi) \right] \qquad\qquad (4)$$

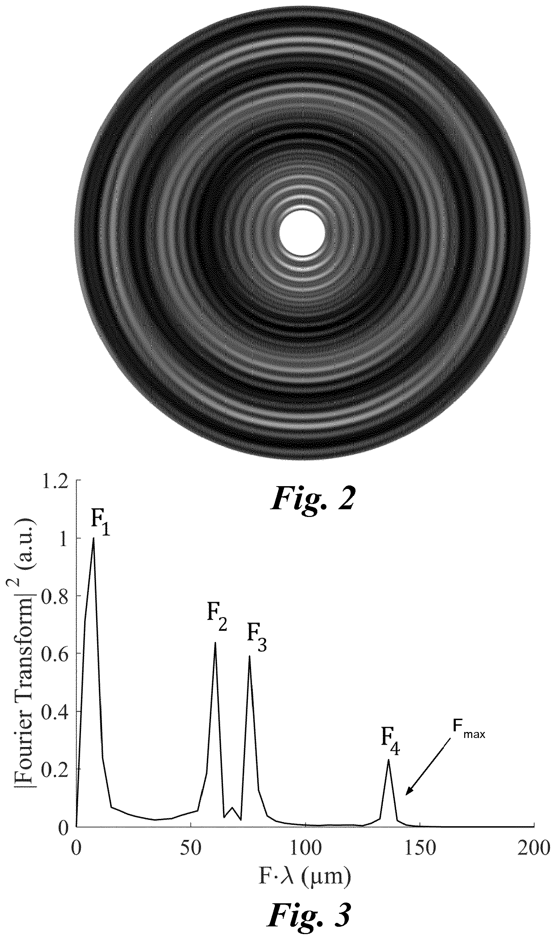

where $k$ is the wave number ($k = 2\pi/\lambda$), $\lambda$ is the wavelength of the incident light, $i_1$ and $i_2$ are the normalized far-field intensities, $I_b$ is the intensity of the incident light and r and $\varphi$ are the spherical coordinates in space. A numerical simulation of the intensity pattern produced by a water droplet is presented in Figure 2. In order to understand how the droplet size is related to the intensity distribution of the backscattered light, it is necessary to briefly explain how the backscattered light interferes. The light rays that are scattered in the backwards direction are the ones that suffer:

- one external reflection

- one internal reflection

- high number of internal reflections which produce that the rays are backscattered from the edge of the droplet.

These light rays interfere between each other in the far-field, resulting in concentric light intensity rings with different angular frequencies. Figure 3 shows the Fourier Transform of the intensity distribution showed in Figure 2. Several angular frequencies can be noted in Figure 3. The peaks observed in this figure correspond to the interference between two different scattered light rays, and the frequency of the peak is proportional to the separation distance between these rays, and is related to the droplet diameter by geometrical equations. For example, the highest angular frequency where the Fourier transform presents a peak corresponds to the interaction between the light rays that are scattered further away from each other, i.e. the light rays scattered from the edge of the droplet. Therefore, analogously to the Young's double-slit experiment, the following relation can be established:

$$droplet\ size = F_{max} * \lambda \qquad\qquad (5)$$

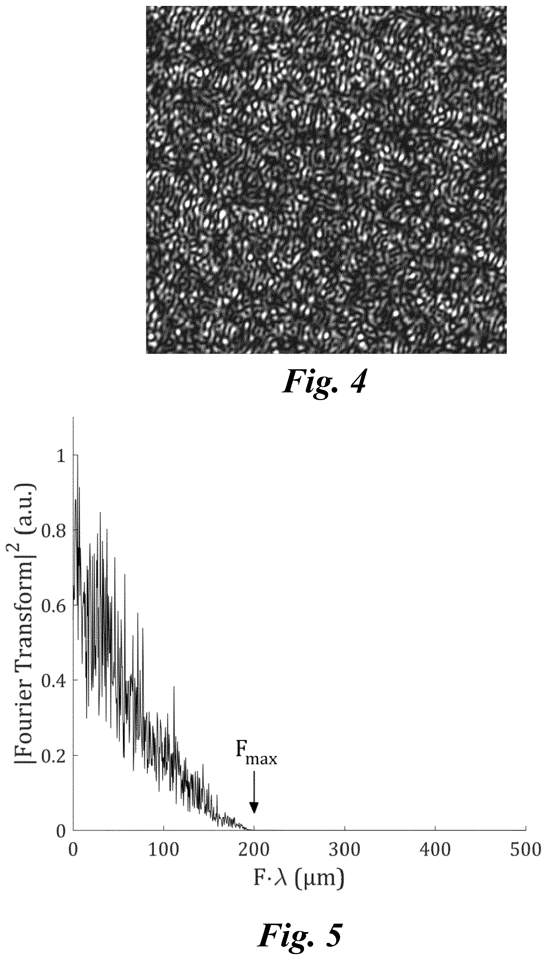

In the case of an irregular particle, the light rays that are scattered in the backwards direction are distributed over all the surface of the particle, so the interference becomes more complex. A numerical simulation of the intensity pattern produced by an irregular particle is presented in Figure 4. The Fourier Transform that corresponds to this intensity pattern is shown in Figure 5. Even if no distinctive frequency peaks can be found in Figure 5, as in the case of a spherical droplet, the highest frequency in the intensity pattern from an irregular particle still corresponds to the light rays that are further away from each other, which represent the size of the particle in a given direction. Therefore, equation 5 can also be applied to obtain the size of irregular particles, wherein $F_{max}$ is the highest angular frequency where the Fourier transform presents a peak:

$$particle\ size = F_{max} * \lambda \qquad\qquad (6)$$

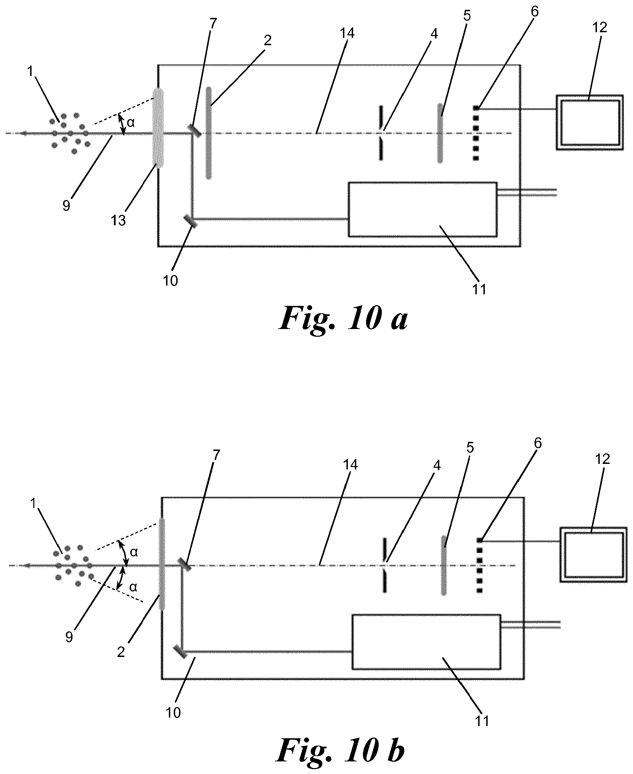

The system here described can be placed into a probe for laboratory or industrial use. It is understood that the parameters of the optical elements described before, such as focal length, distance, diameter, etc., can be modified to make the instrument as compact as needed. Some examples of an instrument probe are given in Figure 10a for the system described in Figure 1a, and in Figure 10b for the system described in Figure 1b. For clarity, the numbers used to describe each element are kept the same throughout all the figures. In both probes, the source of the illumination beam **11** and a processing element **12** have been added. Furthermore, an optical window **13** has been added in Figure 10a. The processing element **12** comprises, for example, a computer and permits to apply a Fourier transform onto said distribution pattern recorded by the detector. Further, this computer also has selecting means for identifying a maximum angular frequency ($F_{max}$) where said Fourier transform presents a peak. For calculating the size of the particle from said maximum angular frequency ($F_{max}$), the computer comprises computing means.

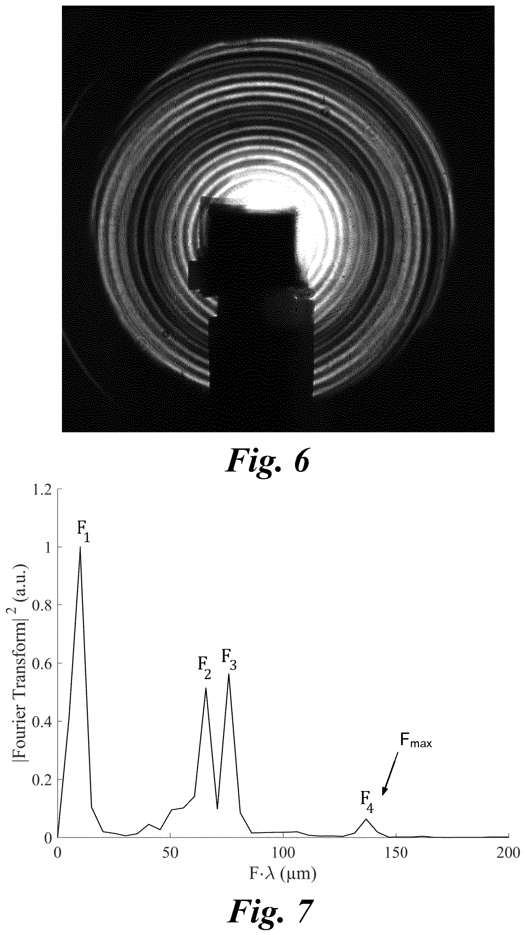

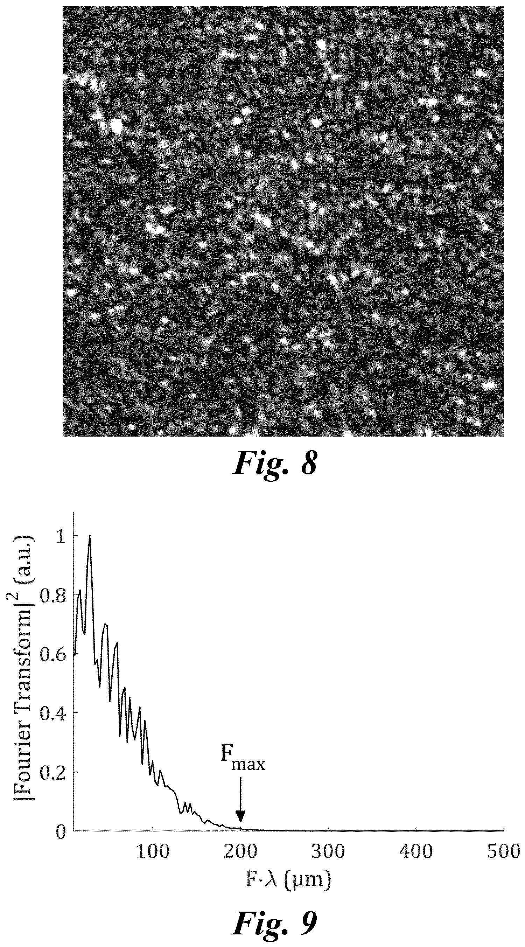

Two examples of size measurements performed with such a system are given in figures 6 to 9. They were performed with a configuration as the one described in Figure 1a. In the case of Figures 6 and 7, a pulsed laser with a wavelength of 532 nm was used as an illuminating beam to measure the diameter of a water droplet. As seen, the backscattered light pattern corresponds to the concentric rings, and the Fourier analysis of these rings reveals different peaks. The last peak was used in this case to obtain the droplet diameter. In the case of Figures 8 and 9, a continuous wave laser with a wavelength of 632.8 nm was used to measure the particle size of a sand particle. A speckle pattern is observed in this case. In both cases, a digital camera with a CMOS sensor was used as a detector. The processing element was a laptop with a Matlab code to do the calculations.

## Claims

1. A method for determining the size of a particle present in a sample volume (1) comprising the steps of

 - directing a coherent light beam (9), in particular an essentially monochromatic light beam, along an optical axis (14) towards the particle to be measured and making to impinge this beam (9) upon the particle;
 - collecting light that is scattered backward (8) by the particle within an angle ($\alpha$) of 1° to 15° with respect to the optical axis (14) by means of a first lens (2) aligned on said optical axis;
 - determining the light intensity distribution pattern of an out-of-focus image of said particle by means of a detector;
 - obtaining angular frequencies of said pattern by performing a Fourier transform of said pattern;
 - selecting the maximum angular frequency (Fmax) where said Fourier transform presents a peak;
 - calculating the size of the particle from said maximum angular frequency (Fmax),

 **characterized in that** the first lens (2) is aligned on said optical axis (14) such that said out-of-focus image is formed in a focal plane (3) of this first lens (2); and **in that** the method comprises setting a length of the sample volume (1) along said optical axis (14) by providing a pinhole (4) with an aperture on said optical axis (14) between said focal plane (3) and said detector, said pinhole (4) defining the length of the sample volume (1) and being positioned on the position of an image of a center of said sample volume (1) formed by said first lens (2).

2. Method according to claim 1, comprising adjusting the length of the sample volume (1) along said optical axis (14) by adjusting the diameter of the aperture of said pinhole (4).

3. Method according to claim 1 or 2, comprising projecting said out-of-focus image onto a sensor element (6) of said detector by means of a second lens (5).

4. Method according to claim 3, comprising imaging said out-of-focus image onto said detector by means of said second lens (5) positioned on said optical axis (14) at a side of said pinhole (4) opposite to another side of the pinhole (4) directed towards said first lens (2).

5. Method according to any of claims 1 to 4, wherein said incident light beam (9) has a wavelength ($\lambda$) and wherein calculating the size of the particle comprises multiplying said maximum angular frequency ($F_{max}$) with said wavelength ($\lambda$).

6. Method according to any of claims 1 to 5, comprising characterising said particle as a droplet when said intensity distribution pattern essentially comprises concentric circles or characterising said particle as an irregular particle when said intensity distribution pattern essentially comprises speckles.

7. A device for determining the size of a particle present in a sample volume (1) comprising

- a light source (11) permitting to direct a coherent light beam (9) along an optical axis (14) towards said sample volume (1) containing the particle to be measured such that said light beam (9) impinges upon the particle;
- a first lens (2) aligned on said optical axis (14) for collecting light (8) that is scattered backward by the particle within an angle ($\alpha$) of 1° to 15° with respect to the optical axis (14);
- a detector (6) capable of capturing an out-of-focus image and for recording a light intensity distribution pattern of said out-of-focus image;
- a processing element (12) configured to:

- apply a Fourier transform onto said distribution pattern obtaining angular frequencies of said pattern;
- identify a maximum angular frequency ($F_{max}$) where said Fourier transform presents a peak;
- calculate the size of the particle from said maximum angular frequency ($F_{max}$);

**characterized in that** the first lens (2) generates said out-of-focus image of said particle in a focal plane (3) of said first lens (2); and **in that** a pinhole (4) is positioned on said optical axis (14) between said focal plane (3) and said detector at the position of an image of a center of said sample volume (1) generated by said first lens (2).

8. Device according to claim 7, wherein said pinhole (4) comprises an adjustable aperture centered along said optical axis (14) permitting to adjust the length of said sample volume (1) along said optical axis (14).

9. Device according to claim 7 or 8, comprising a second lens (5) aligned along said optical axis (14), wherein this second lens (5) is imaging said out-of-focus image from said focal plane (3) of said first lens (2) on a sensor (6) of said detector.

10. Device according to any of claims 7 to 9, wherein said light source (11) is substantially monochromatic.

## Patentansprüche

1. Verfahren zum Bestimmen der Größe eines in einem Probenvolumen (1) vorhandenen Partikels, umfassend die folgenden Schritte:

- Richten eines kohärenten Lichtstrahls (9), insbesondere eines im Wesentlichen monochromatischen Lichtstrahls, entlang einer optischen Achse (14) auf das zu messende Partikel und Bewirken, dass dieser Strahl (9) auf das Partikel auftrifft;
- Sammeln des Lichts (8), das von dem Partikel innerhalb eines Winkels ($\alpha$) von 1° bis 15° in Bezug auf die optische Achse (14) zurückgestreut wird, mithilfe einer ersten Linse (2), die auf die optische Achse ausgerichtet ist;
- Bestimmen des Lichtintensitäts-Verteilungsmusters eines unscharfen Bilds des Partikels mithilfe eines Detektors;
- Ermitteln der Winkelfrequenzen des Musters durch Ausführen einer Fourier-Transformation des Musters;
- Auswählen der maximalen Winkelfrequenz ($F_{max}$), bei der die Fourier-Transformation einen Peak aufweist;
- Berechnen der Größe des Partikels aus der maximalen Winkelfrequenz ($F_{max}$),

**dadurch gekennzeichnet, dass**

die erste Linse (2) so auf die optische Achse (14) ausgerichtet wird, dass das unscharfes Bild in einer Brennebene (3) dieser ersten Linse (2) erzeugt wird; und dass das Verfahren das Festlegen einer Länge des Probenvolumens (1) entlang der optischen Achse (14) umfasst, indem eine Lochblende (4) mit einer Apertur auf der optischen Achse (14) zwischen der Brennebene (3) und dem Detektor vorgesehen wird, wobei die Lochblende (4) die Länge des Probenvolumens (1) definiert und an der Position eines Bilds einer Mitte des Probenvolumens (1) positioniert ist, das durch die erste Linse (2) erzeugt wird.

2. Verfahren nach Anspruch 1, umfassend das Einstellen der Länge des Probenvolumens (1) entlang der optischen Achse (14) durch Einstellen des Durchmessers der Apertur der Lochblende (4).

3. Verfahren nach Anspruch 1 oder 2, umfassend das Projizieren des unscharfen Bilds auf ein Sensorelement (6) des Detektors mithilfe einer zweiten Linse (5).

4. Verfahren nach Anspruch 3, umfassend das Abbilden des unscharfen Bilds auf dem Detektor mithilfe der zweiten Linse (5), die auf der optischen Achse (14) auf einer Seite der Lochblende (4) positioniert ist, die einer anderen Seite der Lochblende (4) gegenüberliegt, die der ersten Linse (2) zugewandt ist.

5. Verfahren nach einem der Ansprüche 1 bis 4, wobei der einfallende Lichtstrahl (9) eine Wellenlänge ($\lambda$) aufweist und wobei das Berechnen der Größe des Partikels das Multiplizieren der maximalen Winkelfrequenz ($F_{max}$) mit der Wellenlänge ($\lambda$) umfasst.

6. Verfahren nach einem der Ansprüche 1 bis 5, umfassend das Charakterisieren des Partikels als Tröpfchen, wenn das Intensitätsverteilungsmuster im Wesentlichen konzentrische Kreise umfasst, oder das Charakterisieren des Partikels als unregelmäßiges Partikel, wenn das Intensitätsverteilungsmuster im Wesentlichen Sprenkel umfasst.

7. Vorrichtung zum Bestimmen der Größe eines in einem Probenvolumen (1) vorhandenen Partikels, umfassend

- eine Lichtquelle (11), die es ermöglicht, einen kohärenten Lichtstrahl (9) entlang einer optischen Achse (14) auf das Probenvolumen (1) zu richten, das das zu messende Partikel enthält, sodass der Lichtstrahl (9) auf das Partikel auftrifft;
- eine auf die optische Achse (14) ausgerichtete erste Linse (2) zum Sammeln von Licht (8), das von dem Partikel innerhalb eines Winkels ($\alpha$) von 1° bis 15° in Bezug auf die optische Achse (14) zurückgestreut wird;
- einen Detektor (6), der imstande ist, ein unscharfe Bild zu erfassen und ein Lichtintensitäts-Verteilungsmuster des unscharfen Bilds aufzuzeichnen;
- ein Verarbeitungselement (12), das dafür ausgelegt ist,

- eine Fourier-Transformation auf das Verteilungsmuster anzuwenden, um Winkelfrequenzen des Musters zu erhalten;
- eine maximale Winkelfrequenz ($F_{max}$) zu identifizieren, bei der die Fourier-Transformation einen Peak aufweist;
- die Größe des Partikels aus der maximalen Winkelfrequenz ($F_{max}$) zu berechnen;

**dadurch gekennzeichnet, dass**

die erste Linse (2) das unscharfes Bild des Partikels in einer Brennebene der ersten Linse (2) erzeugt; und dass eine Lochblende (4) auf der optischen Achse (14) zwischen der Brennebene (3) und dem Detektor an der Position eines Bilds einer Mitte des Probenvolumens (1) positioniert ist, das durch die erste Linse (2) erzeugt wird.

8. Vorrichtung nach Anspruch 7, wobei die Lochblende (4) eine einstellbare Apertur umfasst, die entlang der optischen Achse (14) zentriert ist und es ermöglicht, die Länge des Probenvolumens (1) entlang der optischen Achse (14) einzustellen.

9. Vorrichtung nach Anspruch 7 oder 8, umfassend eine zweite Linse (5), die entlang der optischen Achse (14) ausgerichtet ist, wobei diese zweite Linse (5) das unscharfe Bild von der Brennebene (3) der ersten Linse (2) auf einem Sensor (6) des Detektors abbildet.

10. Vorrichtung nach einem der Ansprüche 7 bis 9, wobei die Lichtquelle (11) im Wesentlichen monochromatisch ist.

**Revendications**

1. Procédé de détermination de la taille d'une particule présente dans un volume d'échantillon (1), comprenant les étapes suivantes :

- diriger un faisceau de lumière cohérente (9), en particulier un faisceau de lumière essentiellement monochromatique, le long d'un axe optique (14) en direction de la particule à mesurer et faire en sorte que ledit faisceau (9) frappe la particule ;

- recueillir la lumière rétrodiffusée (8) par la particule à l'intérieur d'un angle ($\alpha$) compris entre 1° et 15° par rapport à l'axe optique (14) au moyen d'une première lentille (2) qui est alignée sur ledit axe optique ;

- déterminer le motif de distribution d'intensité lumineuse d'une image floue de ladite particule au moyen d'un détecteur ;

- obtenir les fréquences angulaires dudit motif en exécutant une transformée de Fourier dudit motif ;

- sélectionner la fréquence angulaire maximum ($F_{max}$) à laquelle ladite transformée de Fourier présente un pic ; et

- calculer la taille de la particule à partir de ladite fréquence angulaire maximum ($F_{max}$),

**caractérisé en ce que** la première lentille (2) est alignée sur ledit axe optique (14) de telle sorte que ladite image floue soit formée dans un plan focal (3) de ladite première lentille (2) ; et **en ce que** le procédé comprend le réglage d'une longueur du volume d'échantillon (1) le long dudit axe optique (14) en prévoyant un sténopé (4) comportant une ouverture sur ledit axe optique (14) entre ledit plan focal (3) et ledit détecteur, dans lequel ledit sténopé (4) définit la longueur du volume d'échantillon (1) et est positionné au niveau de la position d'une image d'un centre dudit volume d'échantillon (1) formée par ladite première lentille (2).

2. Procédé selon la revendication 1, comprenant le réglage de la longueur du volume d'échantillon (1) le long dudit axe optique (14) en réglant le diamètre de l'ouverture dudit sténopé (4).

3. Procédé selon la revendication 1 ou 2, comprenant la projection de ladite image floue sur un élément de capteur (6) dudit détecteur au moyen d'une seconde lentille (5).

4. Procédé selon la revendication 3, comprenant la projection de ladite image floue sur ledit détecteur au moyen de ladite seconde lentille (5) positionnée sur ledit axe optique (14) d'un côté dudit sténopé (4) qui est opposé à un autre côté du sténopé (4) orienté en direction de ladite première lentille (2).

5. Procédé selon l'une quelconque des revendications 1 à 4, dans lequel ledit faisceau de lumière incidente (9) présente une longueur d'onde ($\lambda$), et dans lequel le calcul de la taille de la particule comprend la multiplication de ladite fréquence angulaire maximum ($F_{max}$) par ladite longueur d'onde ($\lambda$).

6. Procédé selon l'une quelconque des revendications 1 à 5, comprenant la caractérisation de ladite particule en tant que gouttelette lorsque ledit motif de distribution d'intensité se compose essentiellement de cercles concentriques, ou la caractérisation de ladite particule en tant que particule irrégulière lorsque ledit motif de distribution d'intensité comprend essentiellement des mouchetures.

7. Dispositif pour déterminer la taille d'une particule présente dans un volume d'échantillon (1), comprenant :

- une source de lumière (11) qui permet de diriger un faisceau de lumière cohérente (9) le long d'un axe optique (14) en direction dudit volume d'échantillon (1) contenant la particule à mesurer de telle sorte que ledit faisceau de lumière (9) frappe la particule;

- une première lentille (2) qui est alignée sur ledit axe optique (14) dans le but de recueillir la lumière (8) rétrodiffusée par la particule à l'intérieur d'un angle ($\alpha$) compris entre 1° et 15° par rapport à l'axe optique (14) ;

- un détecteur (6) capable de capturer une image floue et à enregistrer un motif de distribution d'intensité lumineuse de ladite image floue ; et

- un élément de traitement (12) configuré de manière à :

- appliquer une transformée de Fourier sur ledit motif de distribution dans le but d'obtenir des fréquences angulaires dudit motif ;

- identifier une fréquence angulaire maximum ($F_{max}$) pour laquelle ladite transformée de Fourier présente un pic ;

- calculer la taille de la particule à partir de ladite fréquence angulaire maximum (Fmax) ;

**caractérisé en ce que** la première lentille (2) génère ladite image floue de ladite particule dans un plan focal de ladite première lentille (2) ; et **en ce qu'**un sténopé (4) est positionné sur ledit axe optique (14) entre ledit plan focal (3) et ledit détecteur au niveau de la position d'une image d'un centre dudit volume d'échantillon (1) générée par ladite première lentille (2).

8. Dispositif selon la revendication 7, dans lequel ledit sténopé (4) comporte une ouverture réglable qui est centrée le long dudit axe optique (14) et qui permet de régler la longueur dudit volume d'échantillon (1) le long dudit axe optique (14).

9. Dispositif selon la revendication 7 ou 8, comprenant une seconde lentille (5) qui est alignée le long dudit axe optique (14), dans lequel ladite seconde lentille (5) produit une image de ladite image floue du plan focal (3) de ladite première lentille (2) sur un capteur (6) dudit détecteur.

10. Dispositif selon l'une quelconque des revendications 7 à 9, dans lequel ladite source de lumière (11) est sensiblement monochromatique.

**Fig. 1 a**

**Fig. 1 b**

**Fig. 2**

**Fig. 3**

*Fig. 4*

*Fig. 5*

*Fig. 6*

*Fig. 7*

**Fig. 8**

**Fig. 9**

**_Fig. 10 a_**

**_Fig. 10 b_**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1162447 A
- EP 0701707 A
- US 3689772 A
- US 4492467 A
- US 2008218738 A1

**Non-patent literature cited in the description**

- **A.R. GLOVER et al.** Interferometric laser imaging for droplet sizing: a method for droplet-size measurement in sparse spray systems. *Appl. Opt.,* 1995
- **MAEDA ; KAWAGUCHI.** *Method and apparatus for measuring diameter and distribution of micro bubble and micro liquid drop and optical system for measuring diameter and distribution of micro bubble and micro liquid drop*
- **J. P. A. J. VAN BEECK ; M. L. RIETHMULLER.** Rainbow phenomena applied to the measurement of droplet size and velocity and to the detection of non-sphericity. *Appl. Opt.,* 1996
- **J.P.A.J. VAN BEECK et al.** Global rainbow thermometry for droplet-temperature measurement. *Opt. Lett.,* 1999
- **M. R. VETRANO et al.** Characterization of a non-isothermal water spray by global rainbow thermometry. *Exp. Fluids,* 2006
- **SCHMITZ et al.** *Laser diffraction particle sizing apparatus and method*
- **GEORGE et al.** *Photodetector light pattern detector*
- **K. BESWICK et al.** The backscatter cloud probe - a compact low-profile autonomous optical spectrometer. *Atmos. Meas. Tech.,* 2014
- **DRAIN et al.** *Measurement of the size of particles*
- **B. MAYER et al.** Remote sensing of water cloud droplet size distributions using backscatter glory: a case study. *Atmos. Chem. Phys. Discuss.,* 2004
- **SARA GONZÁLEZ RUIZ et al.** Feasibility of using glory and speckle patterns for sizing spherical and irregular particles. optical society of America, vol. 53